# EUROPEAN PATENT SPECIFICATION

(11) **EP 0 616 594 B1**
(45) Date of publication and mention of the grant of the patent: **20.03.1996**
(21) Application number: 93900115.2
(22) Date of filing: 14.12.1992
(51) Int. Cl.: B65G 33/04

(54) **Method for transferring boxes, cases and the like.**
Verfahren zum Transport von Schachteln, Kasten o.ä.
Procédé pour le transport de boîtes, de caisses etc.

(30) Priority: 16.12.1991 FI 915907
(43) Date of publication of application: 28.09.1994
(73) Proprietor: MUSTAJÄRVI, Hannu, SF-39960 Sarvela (FI); MUSTAJÄRVI, Tuomo, SF-39960 Sarvela (FI)
(72) Inventor: MUSTAJÄRVI, Hannu, SF-39960 Sarvela (FI); MUSTAJÄRVI, Tuomo, SF-39960 Sarvela (FI)
(74) Representative: Smulders, Theodorus A.H.J., Ir.
(86) International application number: FI9200340
(87) International publication number: WO9312021

(56) References cited:
- FI-B- 65 598
- GB-A- 794 253
- GB-A- 797 685
- SE-B- 422 567

## Description

The present invention relates to a method for transferring boxes or cases by means of a screw or helical guide from a first location to a second location, wherein said boxes are partially supported by a bearing surface and are moved by means of a rotational force-transmitting contact, exerted on the boxes by the screw or helical guide.

Such method is known from GB-A-797,685. According to this method the boxes to be transferred rest with their bottom surface on the blades of a rotatable helical conveyor, the pitch distance of these blades being greater than the vertical dimension of the boxes. The bearing surface is constituted by the blades of the conveyor. The boxes may be closed on all sides during the transfer.

The object of the invention is to provide a method for transferring boxes or cases, enabling the use of a screw or helical guide, the pitch distance of which is much smaller than the dimension of the boxes in the direction of transport.

According to the invention the method is characterized in that the boxes are provided with at least one partially open side through which the screw or helical guide extends into the interior of the boxes so as to engage with at least one force-transmitting surface which is oriented substantially transverse to the direction of movement.

Preferably the screw or helical guide engages with an edge portion of the force-transmitting surface of the boxes, which edge portion is the most distant one from a floor section of the bearing surface.

When the bearing surface makes a small angle with a horizontal plane the screw or helical guide exerts a positive transferring force on the boxes to be transferred. If the bearing surface is arranged substantially vertically, the transferring force is delivered by gravity, in which case energy is saved and the gravitational traveling speed of the boxes is reduced by means of operating elements capable of decelerating the rotating motion of the screw or helical guide caused by the gravitational movement of the boxes.

The method according to the invention and an embodiment of an apparatus for applying said method will now be described with reference to the drawing in which
Fig. 1 shows a front view of an apparatus for applying a method of the invention,
Fig. 2 is a side view of the same apparatus, and
fig. 3 shows a detail explaining the operating principle of the invention.

An apparatus applying a method of the invention is intended for carrying objects like boxes or cases (hereinafter referred to as bulk) during the course of its transfer in a substantially single transfer direction s from a first point I, such as a supply or loading station or a like, to a second point II, such as a delivery or unloading station or a like. The bulk 1 being transferred includes at least one substantially transverse and rigid transmitting or contact surface 2, such as a leading or trailing edge 2a, 2b or a like, and at least one connecting surface 3, such as an open top surface 3a, providing a connection through the interior of bulk 1 to said transmitting surface 2, and it is carried by means of a transfer mechanism 4 operating between first and second points I, II.

The transfer mechanism 4 includes a contact element 5, rotating around its longitudinal axis a, and a bearing surface 6, spaced at a certain distance from contact element 5 and extending in its longitudinal direction parallel to transfer direction s and supporting the bulk 1 during the course of its transfer. The contact element 5 is in a force-transmitting contact with bulk 1 and includes a first component 5a, extending in transfer direction s and spaced at a constant distance from its longitudinal axis a.

In order to carry bulk 1 during the course of its transfer by means of transfer mechanism 4 in accordance with the invention, its transmitting surface 2, such as leading edge 2b and/or trailing edge 2a, is adapted to be contacted by the first component 5a of contact element 5 in a manner that said first component 5a extends partially through the open top surface 3a serving as said connecting surface 3 substantially into the interior of bulk 1.

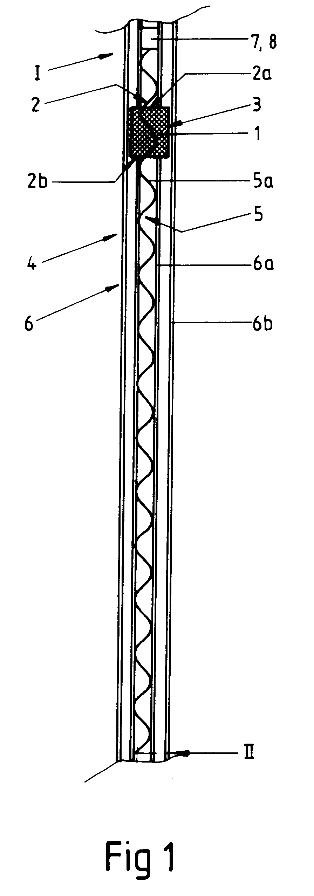

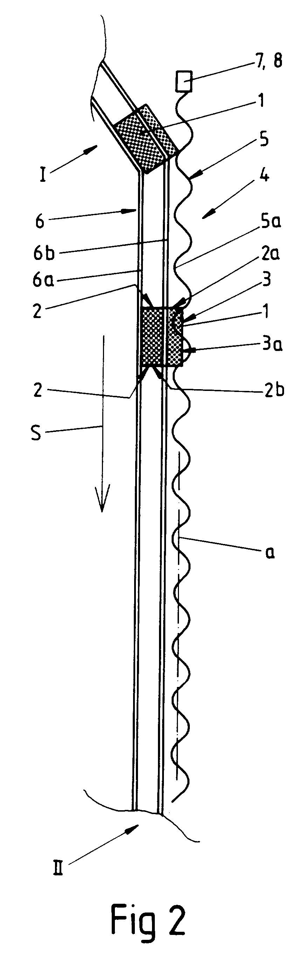

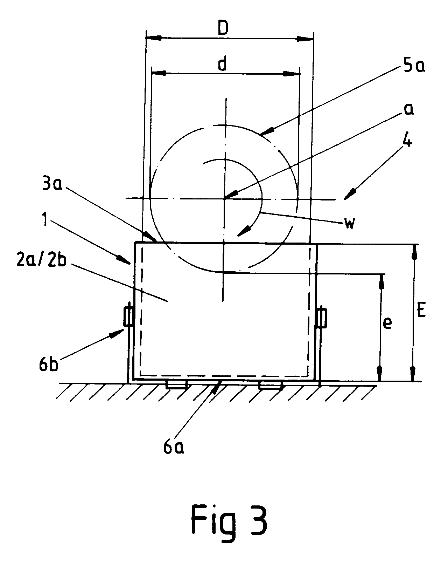

In the preferred embodiment shown in figs. 1 and 2, the method has been applied in vertical direction, the movement of bulk 1 being controlled by means of a chute 6, serving as a bearing surface and including floor sections 6a and side sections 6b. Furthermore, in a preferred embodiment, the contact element 5 comprises a spiral tube, rod or a like 5a, serving substantially as said first component and arranged, as shown e.g. in fig. 3, in a force-transmitting contact with bulk 1 in a manner that the spiral component 5a is in contact with the edge portion of whichever transmitting surface 2a, 2b of bulk 1 is furthest away from bearing surface 6a.

Fig. 3 illustrates the operating principle of the invention by showing a detail included in transfer mechanism 4. Thus, in order to carry bulk 1 in transfer mechanism 4 by means of contact element 5 and in order to achieve the movement of bulk 1 relative to bearing surface 6, the smallest distance e of the first component 5a of contact element 5 from bearing surface 6a is, on the one hand, substantially less than the greatest extent E of the transmitting surface 2a, 2b of bulk 1 being carried and, on the other hand, the outer diameter d of first component 5a is substantially less than the smallest clear width D of the connecting surface 3a of bulk 1. The above-described assembly is essentially different from conventional screw-conveyor systems in its operating principle.

Thus, in its most simple form a method of the invention can be applied in a manner that the apparatus comprises operating elements 7, such as a brake or a like, reducing the gravitational traveling speed of bulk 1 for decelerating the rotating motion w of contact element 5 caused by the gravitational movement of bulk 1. In reference to figs. 2 and 3, the apparatus hence operates in a manner that the bulk 1 picked up at supply point I comes into contact with the spiral 5a of transfer mechanism 4 which, under the action of a contact force exerted by article 1 begins to rotate around its longitudinal axis a, as shown by w. Should the rotating motion of spiral 5a be nearly frictionless, said article 1 would be allowed nearly a free drop in chute 6. The action of the above-described brake 7 can be applied to adjust the rotating motion of spiral 5a by varying the braking force for obtaining a suitable transfer speed.

By the application of conventional conveyor technology it is possible to fit the apparatus with transmission elements 8, such as a motor or a like with a variable rotating speed, for effecting on the rotating motion w of spiral 5a for maintaining and/or varying the traveling speed of bulk 1. Thus, an apparatus of the invention is characterized in that the spiral 5a applies the force action of motor 8 to the internal or external edge portion of transmitting surface 2a, 2b which is furthest away from the bearing surface 6 of bulk 1. In conventional screw conveyors, the force action is applied to the entire outer surface section of one transverse wall commencing substantially from the bearing surface.

The method can also be applied e.g. in a substantially horizontal direction. In this case, the apparatus can be designed e.g. in a manner that the open wall of the bulk is located in the bottom, whereby the bulk travels on top of the contact element. Similarly, the bearing surface can be designed to be partially or entirely spiral in transfer direction e.g. for unloading the bulk in a given direction. In addition, the first component of a contact element can be designed as a conventional screw, the outer edges of its threads being, however, rounded in view of minimizing their wearing action. However, an advantage gained by the described spiral design is a very lightweight construction obtained thereby, which makes it possible to minimize the self-operating power required by the apparatus. Naturally, the method can be applied to the transfer of most versatile types of goods, whereby the connecting surface can be partially made of a flexible screen, film or a like, facilitating the relative force action between the contact element and the transmitting surface. Of course the apparatus can also be automated whereby, e.g. for controlling the unloading actions, the bottom section of a transfer mechanism is provided e.g. with a light-operated sensor, which is connected to operating elements and/or a transmission element for varying and/or interrupting the rotating motion of a contact element.

## Claims

1. A method for transferring boxes or cases (1) by means of a screw or helical guide (5) from a first location (I) to a second location (II), wherein said boxes (1) are partially supported by a bearing surface (6) and are moved by means of a rotational force-transmitting contact, exerted on the boxes (1) by the screw or helical guide (5), characterized in that the boxes (1) are provided with at least one partially open side (3a) through which the screw or helical guide (5) extends into the interior of the boxes (1) so as to engage with at least one force-transmitting surface (2) which is oriented substantially transverse to the direction of movement.

2. Method as set forth in claim 1, characterized in that the screw or helical guide (5) engages with an edge portion of the force-transmitting surface (2) of the boxes (1), which edge portion is the most distant one from a floor section (6a) of the bearing surface (6).

3. A method as set forth in claim 1 or 2, wherein the transfer mechanism (4) comprising said bearing surface and the screw or helical guide (5) is capable of operating in an inclined or vertical position, using gravity as the transferring force, characterized in that the gravitational traveling speed of the boxes (1) is reduced by means of operating elements (7) capable of decelerating the rotating motion (w) of the screw or helical guide (5) caused by the gravitational movement of the boxes (1).

4. Method as set forth in any of the preceding claims 1 to 3, characterized in that the smallest distance (e) between the screw or helical guide (5) and the floor section (6a) of the bearing surface (6) is chosen smaller than the greatest dimension (E) of the transmitting surface (2) of the boxes (1) from the bearing surface floor section (6a) of the bearing surface (6) and in that the outer diameter (d) of the screw or helical guide (5) is chosen smaller than the smallest clear width (D) of the open side (3a) of the boxes (1).

## Patentansprüche

1. Verfahren zum Transportieren von Schachteln oder Kasten (1) mit Hilfe einer Schraube oder Förderspirale (5) von einer ersten Stelle I zu einer zweiten Stelle II, wobei die genannten Schachteln (1) teilweise auf einer Führungsfläche (6) aufliegen und durch den auf die Schachteln (1) ausgeübten drehenden, Kraft ausübenden Kontakt der Schraube oder Spirale (5) bewegt werden, dadurch gekennzeichnet, dass die Schachteln (1) mindestens eine teilweise offene Seite (3a) aufweisen, in welche die Schraube oder Spirale (5) in das Innere der Schachtel (1) ragt und an einer kraftübertragenden Fläche (2), welche im wesentlichen quer zur Fortbewegungsrichtung verläuft, anliegt.

2. Verfahren nach Patentanspruch 1, dadurch gekennzeichnet, dass die Schraube oder Spirale (5) am Rand derjenigen kraftübertragenden Fläche (2) der Schachteln (1) anliegt, welche am weitesten vom Bodenteil (6a), der auf der Führungsfläche (6) aufliegt, entfernt ist.

3. Verfahren nach Patentanspruch 1 oder 2 mit einer Transportvorrichtung (4), welche eine Führungsfläche und eine Schraube oder Förderspirale (5) umfasst und in schräger oder vertikaler Richtung unter Einwirkung der Schwerkraft arbeitet, dadurch gekennzeichnet, dass die Fallgeschwindigkeit der Schachteln (1) dadurch reduziert wird, dass Mittel (7) angebracht sind, welche die der Schraube oder Spirale (5) infolge der Schwerkraft der Schachteln (1) aufgezwungene Drehgeschwindigkeit (w) verzögern.

4. Verfahren nach einem der Ansprüche 1-3, dadurch gekennzeichnet, dass der kleinste Abstand (e) zwischen der Schraube oder Förderspirale (5) und dem auf der Führungsfläche (6) aufliegenden Bodenteil (6a) kleiner ist als der grösste Abstand (E) der kraftübertragenden Fläche (2) der Schachtel (1) von der Führungsfläche (6) und dass der Aussendurchmesser (d) der Schraube oder Förderspirale (5) kleiner ist als die kleinste Oeffnungsweite (D) der offenen Seite (3a) der Schachtel (1).

## Revendications

1. Procédé pour transférer des boîtes ou caisses (1) au moyen d'une vis ou d'un guide hélicoïdal (5) d'un premier emplacement (I) à un deuxième emplacement (II), dans lequel lesdites boîtes (1) sont partiellement supportées par une surface porteuse (6) et sont mises en mouvement au moyen d'un contact tournant, de transmission de la force, exercé sur les boîtes (1) par la vis ou le guide hélicoïdal (5), caractérisé en ce que les boîtes (1) sont munies d'au moins un côté partiellement ouvert (3a) à travers lequel la vis ou le guide hélicoïdal (5) s'engage dans le volume intérieur des boîtes (1) de manière à coopérer avec au moins une surface (2) de transmission de la force qui est orientée sensiblement transversalement à la direction du mouvement.

2. Procédé selon la revendication 1, caractérisé en ce que la vis ou le guide hélicoïdal (5) coopère avec une partie de bord de la surface (2) de transmission de la force des boîtes (1), laquelle partie de bord est celle qui est la plus éloignée d'une section de plancher (6a) de la surface porteuse (6).

3. Procédé selon la revendication 1 ou 2, dans lequel le mécanisme de transfert (4) comprend ladite surface porteuse et la vis ou le guide hélicoïdal (5) est capable de travailler dans une position inclinée ou verticale, en utilisant la gravité comme force de transfert, caractérisé en ce que la vitesse de défilement par gravité des boîtes (1) est réduite au moyen d'éléments travaillants (7) capables de décélérer le mouvement rotatif (w) de la vis ou du guide hélicoïdal (5) provoqué par le mouvement des boîtes (1) par gravité.

4. Procédé selon une quelconque des revendications précédentes 1 à 3, caractérisé en ce que la distance minimum (e) entre la vis ou le guide hélicoïdal (5) et la section de plancher (6a) de la surface porteuse (6) est choisie plus petite que la dimension maximum (E) de la surface de transmission (2) des boîtes (1), mesurée à partir de la section de plancher (6a) de la surface porteuse (6), et en ce que le diamètre extérieur (d) de la vis ou du guide hélicoïdal (5) est choisi plus petit que la plus petite largeur libre (D) du côté ouvert (3a) des boîtes (1).
